# EUROPÄISCHE PATENTSCHRIFT

(11) **EP 3 753 791 B1**
(45) Veröffentlichungstag und Bekanntmachung des Hinweises auf die Patenterteilung: **14.09.2022**
(21) Anmeldenummer: 20180355.8
(22) Anmeldetag: 16.06.2020
(51) Int. Cl.: B60R 16/023, B60R 16/037, B60R 21/015

(54) **VERFAHREN ZUR ANZEIGE DER ANORDNUNG VON KOMPONENTEN IN EINEM FAHRZEUG**
METHOD FOR DISPLAYING THE ARRANGEMENT OF COMPONENTS IN A VEHICLE
PROCÉDÉ D'AFFICHAGE DE L'AGENCEMENT DE COMPOSANTS DANS UN VÉHICULE

(30) Priorität: 19.06.2019 DE 102019208932
(43) Veröffentlichungstag der Anmeldung: 23.12.2020
(73) Patentinhaber: VOLKSWAGEN AG, 38440 Wolfsburg (DE)
(72) Erfinder: Habermalz, Ulf, 38547 Calberlah (DE)

(56) Entgegenhaltungen:
- WO-A1-2013/055810
- DE-A1- 19 803 682
- DE-A1-102016 121 148

## Beschreibung

Die Erfindung betrifft ein Verfahren zur Anzeige der Anordnung von Komponenten in einem Fahrzeug. Weiterhin betrifft die Erfindung ein Fahrzeug, bei dem ein erfindungsgemäßes Verfahren zur Anzeige der Anordnung von Komponenten eingesetzt wird.

Heutige Fahrzeuge verfügen bereits über eine Vielzahl von Assistenzsystemen, die den Fahrer in einer Vielzahl von Fahrsituationen computerbasiert unterstützen. Solche Assistenzsysteme können auf Sensoren zum Erfassen einer Vielzahl von Messdaten zurückgreifen, welche die Sinnesfähigkeiten des Menschen bei weitem übersteigen. Zudem übertrifft die Geschwindigkeit dieser Assistenzsysteme die menschliche Reaktionszeit signifikant. Bekannte Fahrerassistenzsysteme sind beispielsweise Spurhalteassistenten, Bremsassistenten bei Fußgängererkennung und Abstandsregeltempomaten, insbesondere für Stausituationen.

Zur Erhöhung der Sicherheit der Insassen eines Fahrzeugs werden u.a. auch Sicherheitsassistenzsysteme in die Fahrzeuge integriert. Beispielsweise kann eine drahtlose Sitzbelegungserkennung realisiert werden, die bei entnehmbaren Sitzen im Fahrgastraum überträgt, ob der jeweilige Sitz besetzt ist und ob der zugehörige Sicherheitsgurt ordnungsgemäß angelegt wurde. Eine solche Sitzbelegungserkennung kann kostengünstig über eine Funktechnologie realisiert werden. Vorzugsweise werden hierfür besonders energieeffiziente Nahbereichsverfahren, wie beispielsweise Bluetooth Low Energy (BLE), NFC, WLAN-p oder andere Übertragungstechniken wie induktive Verfahren usw., verwendet. Dazu befindet sich in jedem Sitz eine Sende-Empfangseinheit, die den Zustand des Gurts und einer im Sitz integrierten Sitzbelegungserkennungsmatte auswertet und an das Fahrzeug überträgt. Diese Informationen werden an eine Überwachungseinheit übermittelt, welche zur Bestimmung der Sitzkonfiguration und -belegung die im Fahrzeug vorhanden Sitze regelmäßig abfragt und das Ergebnis an das Fahrzeugsystem weiterleitet. Somit können diese Informationen als Warnungen im Fahrzeug ausgegeben werden.

Neben entnehmbaren Sitzen sind in Fahrzeugen oftmals auch Komponenten verbaut, die entnehmbar sind und/oder an mehreren Stellen im Fahrzeug arretiert werden können.

Beispielsweise kann ein Kindersitz oder ein Klapptisch im Fahrzeug vorgesehen sein, welche je nach Bedarf bei bestimmten Befestigungspunkten an unterschiedlichen Stellen im Fahrzeug arretiert werden können. Diese Komponenten weisen zudem oft mehrere Einstellpositionen (im Folgenden auch als Positionen, einstellbare Positionen oder Stellungen bezeichnet) auf, mit denen diese Komponenten unterschiedlich konfiguriert werden können. Ein Kindersitz kann beispielsweise neben einer Sitzposition auch eine bequemere Liegeposition aufweisen. Bei einem Klapptisch können neben einer eingeklappten Aufbewahrungsstellung auch eine oder mehrere Benutzungsstellungen (z.B. halbseitiges Aufklappen jeweils nur einer Tischhälfte) vorgesehen sein.

Aus Sicherheitsgründen kann es Komponenten geben, die bestimmte Positionen während der Fahrt nicht einnehmen dürfen (sog. unzulässige bzw. nicht empfohlene Komponentenanordnungen). Beispielsweise kann es erforderlich sein, dass bestimmte Klapptische während der Fahrt vollständig verstaut sein müssen, um Verletzungen der Insassen zu vermeiden. Auch kann in einigen Fahrzeugen eine Mittelkonsole vorhanden sein, die beispielsweise entnehmbar, in Schienen längs verschiebbar sowie höhenverstellbar ausgeführt ist. Die verschiedenen Einstellmöglichkeiten mittels der Höhenverstellung stellen unterschiedliche Positionen der Mittelkonsole dar, während eine Arretierung der Mittelkonsole am Fahrzeug an mehreren Befestigungspunkten entlang einer Schiene (bzw. eines Schienensystems) oder anderswo im Fahrzeug vorgesehen sein kann. Ein Befestigungspunkt kann mittig zwischen Fahrer- und Beifahrersitz vorgesehen sein. Ein weiterer Befestigungspunkt könnte sich beispielsweise im Bereich der hinteren Sitzgruppe befinden. Bei den genannten Mittelkonsolen kann beispielsweise aus Gründen der Gebrauchssicherheit bei einer Befestigung zwischen Fahrer- und Beifahrersitz ein Hochfahren der Mittelkonsole in eine obere Einstellposition als unzulässig bzw. als nicht empfohlen angesehen werden. Bevorzugt ist eine Lösung, die eine solche Anordnung im Stand ohne eine Warnung ermöglicht, während im Fahrbetrieb der Nutzer durch geeignete optische und/oder akustische Warnmeldungen zum ordnungsgemäßen Verstauen der Konsole auffordert wird.

Ein auf die verstellbare Komponente aufgebrachter Warnhinweis mit der Beschreibung des ordnungsgemäßen Gebrauchs ist nicht ausreichend, da solche Warnhinweise im Allgemeinen nur wenig Beachtung finden und zudem nicht alle Befestigungspunkte die gleichen Warnhinweise erfordern. Zudem wäre der Warnhinweis in mehreren Sprachen anzubringen, was ein schnelles Erfassen durch den Benutzer weiter erschwert und zudem die optische Gestaltung des Fahrzeuginnenraums stören würde.

Möglich wäre weiterhin eine mechanische, vom Fahrzustand des Fahrzeugs unabhängige Lösung zur generellen Verhinderung unzulässiger Komponentenanordnungen, beispielsweise des Hochfahrens einer oben beschriebenen Mittelkonsole an einem kritischen Befestigungspunkt. Solche mechanischen Lösungen haben jedoch neben einer erhöhten mechanischen Komplexität und den damit verbundenen Kosten auch noch den weiteren Nachteil, dass selbst im Stand des Fahrzeugs eine Benutzung der Komponente dadurch verhindert wird. Weiterhin hätte eine solche mechanische Lösung den Nachteil, dass möglicherweise nicht alle Bediener intuitiv verstehen würden, warum sich beispielsweise die Mittelkonsole nicht in die erste Sitzreihe schieben lässt (aufgrund der mechanischen Sperre bei einer hochgefahrenen Mittelkonsole). Dadurch können Beschädigungen an den Bauteilen nicht ausgeschlossen werden. Eine alternative elektronisch schaltbare Sperrvorrichtung würde zwar eine vom Fahrzustand abhängige Sperrung bestimmter Positionen ermöglichen, dies würde jedoch umfangreiche zusätzliche Verkabelungen im Fahrzeug erfordern und durch die Zuschaltbarkeit dieser Sperre in Abhängigkeit des Fahrzeugzustands die mechanische Komplexität weiter erhöhen. Zudem könnte durch eine kabelgebundene Lösung auch die Entnehmbarkeit oder die Beweglichkeit der Komponenten eingeschränkt werden.

Das beschriebene Problem betrifft sämtliche Fahrzeuge, bei denen die Benutzung bestimmter Komponenten während der Fahrt nicht empfohlen werden soll, und bei denen aufgrund der Entnehmbarkeit oder der Beweglichkeit im Fahrzeug eine kabelgebundene Lösung nicht in Betracht gezogen werden kann. Prinzipiell betrifft dies vor allem Fahrzeuge und Fahrzeugtypen mit variablen Innenräumen sowie in Zukunft auch autonom fahrende Land- und Luftfahrzeuge, bei denen das Fahrzeug (auf Grund des nicht mehr vorhandenen Fahrers) eine Überwachung des Fahrzeugs und die Beachtung des Bordbuches selbstständig vornehmen muss.

DE 198 03 682 A1 betrifft eine Beifahrerschutzvorrichtung für ein Fahrzeug, bei der, wenn der Zustand eines Beifahrers in einem vorderen Beifahrersitz (umfassend den festgelegten Zustand eines Kindersitzes) detektiert wird, Airbags auf der Basis des Detektionszustandes gesteuert und der Detektionszustand in einem RAM gespeichert werden können.

Der Erfindung liegt nun die Aufgabe zugrunde, die Probleme des Standes der Technik zu überwinden oder zumindest zu verringern und eine Lösung für das Problem der Verhinderung unzulässiger bzw. nicht empfohlener Komponentenanordnungen in einem Fahrzeug zur Verfügung zu stellen. Die erfindungsgemäße Aufgabe wird gemäß den unabhängigen Patentansprüchen gelöst durch ein Verfahren zur Anzeige der Anordnung von Komponenten in einem Fahrzeug sowie ein Fahrzeug bei dem ein erfindungsgemäßes Verfahren eingesetzt wird. Bevorzugte Weiterbildungen sind Gegenstand der jeweils rückbezogenen Unteransprüche.

Ein erster Aspekt der Erfindung betrifft ein Verfahren zur Anzeige der Anordnung von Komponenten in einem Fahrzeug, wobei es sich bei den Komponenten um fest an einem oder mehreren Befestigungspunkten im Fahrzeug arretierbare Objekte handelt und die Objekte mindestens zwei verschiedene Einstellpositionen aufweisen. Das Verfahren umfasst die folgenden Schritte: Bestimmung des Befestigungspunktes der arretierten Komponente; Bestimmung einer Einstellposition der arretierten Komponente, wobei die Bestimmung des Befestigungspunktes der Komponente und der Einstellposition der Komponente mittels in Reihe geschalteter mechanischer Kontaktschalter erfolgt; akustische und/oder visuelle Anzeige des Befestigungspunktes und/oder der Einstellposition der Komponente.

Als entsprechende Komponenten des Fahrzeugs werden somit insbesondere einzelne Einrichtungsgegenstände (Objekte) im Innenraum des Fahrzeugs angesehen. Hierbei kann es sich, wie zuvor bereits ausgeführt, beispielsweise um unterschiedlich anordenbare Klapptische, Mittelkonsolen, allgemeine Konsolenelemente, Kindersitze und weitere Elemente handeln. Diese Komponenten sollen zumindest an einer Stelle im Fahrzeug an einem Befestigungspunkt fest arretierbar sein, ansonsten jedoch auch vollständig aus dem Fahrzeug entnehmbar sein. Weiterhin können im Fahrzeug weitere Befestigungspunkte an anderen Stellen vorgesehen sein, so dass die entnommene Komponente an einer anderen Stelle im Fahrzeug arretiert werden kann. Bei einem Befestigungspunkt kann es sich beispielsweise um eine starre Halterung, eine Arretierungsposition entlang einer Schiene oder eine sonstige Vorrichtung zur Befestigung der Komponente handeln. Weiterhin sollen die Komponenten mindestens zwei verschiedene Einstellpositionen (Konfigurationen) aufweisen, zwischen denen gewählt werden kann. Je nach Komponente kann es sich dabei vorzugsweise um unterschiedlich Lagen (z.B. Sitz-/Liegestellung bei einem Kindersitz) oder Zustände (z.B. ein- bzw. ausgeklappt bei einem Klapptisch) handeln.

Als Anordnung wird die Zuordnung einer bestimmten Komponente zu einem Befestigungspunkt und einer Einstellposition dieser Komponente bezeichnet. Das erfindungsgemäße Verfahren zur Anzeige der Anordnung von Komponenten in einem Fahrzeug bezieht sich daher auf die Bereitstellung von Informationen über das Vorhandensein und die jeweilige Konfiguration einzelner Komponenten. Diese Anordnungsinformationen können sich insbesondere an den Fahrer des Fahrzeugs richten, so dass dieser der Anzeige beispielsweise den aktuellen Konfigurationszustand seines Fahrzeugs hinsichtlich der genannten Komponenten entnehmen kann. Unter dem Begriff "Bestimmung" ist dabei eine elektronische Ermittlung der Komponentenanordnung in Bezug auf eine ebenfalls elektronisch zu bewirkende Anzeigemöglichkeit zu verstehen, d.h., für eine Anzeige muss vorab eine Information über die Anordnung der jeweiligen Komponente ermittelt werden.

Der Schritt der Bestimmung des Befestigungspunktes der arretierten Komponente dient der Ermittlung, dass eine entsprechende Komponente im Fahrzeug vorhanden ist und an welcher Stelle im Fahrzeug diese arretiert wurde. Diese Ermittlung bezieht sich auf das Erfassen und Verarbeiten einer entsprechenden Anordnungsinformation. Hierfür kann vorzugsweise über eine mechanische (z.B. vom Befestigungspunkt abhängiges Schalten elektrischer Kontakte) oder elektronische (z.B. mittels RFID-Markierung oder einer anderen geeigneten drahtlosen Übertragungstechnik) Kodierung eine Zuordnung einer Komponente zu einem bestimmten Befestigungspunkt im Fahrzeug erfolgen. Wird beispielsweise eine entsprechende Komponente in einem solchen Befestigungspunkt arretiert, so sollte eine Information über die Art der Komponente und den zur Arretierung genutzten Befestigungspunkt vorliegen. Das Ergebnis der Bestimmung des Befestigungspunktes soll in elektronischer Form vorliegen, die Bestimmung an sich kann jedoch auch mechanische Vorgänge, wie etwa die Betätigung eines Kontaktschalters, beinhalten.

Der Schritt der Bestimmung einer Einstellposition der arretierten Komponente ist analog zu verstehen. Letztlich soll das Ergebnis der Bestimmung, in welcher Einstellposition sich die arretierte Komponente gerade befindet, ebenfalls elektronisch vorliegen. Auch hierbei kann die Bestimmung auch mechanische Vorgänge, wie etwa die Betätigung eines positionsabhängigen Schalters, beinhalten.

Nach der Bestimmung des Befestigungspunktes und einer Einstellposition der arretierten Komponente liegen diese Informationen in elektronischer Form im Fahrzeug vor. Diese Informationen können dann beispielweise akustisch mittels Lautsprecherausgabe und/oder visuell als Lichtsignal oder in einem Display angezeigt werden oder eine andere Form der Benachrichtigung der Insassen (z.B. Nachrichten auf das Smartphone des Nutzers) beinhalten. Dabei muss die Anzeige jedoch nicht die vollständige Information explizit wiedergeben. Es reicht aus, wenn der Anzeige auch nur indirekt Angaben darüber zu entnehmen sind, dass eine unzulässige Komponentenanordnung im Fahrzeug vorliegt. Insbesondere kann sich die Anzeige auf einen Hinweis auf eine bestimmte unzulässige Einstellposition einer Komponente beschränken. Eine akustische Anzeige der Anordnung kann beispielsweise durch ein bestimmtes Schallsignal wie einen Gong oder ein Klingeln erfolgen, es könnte jedoch auch eine konkrete sprachliche Ansage erfolgen, etwa dass ein Klapptisch im hinteren Bereich des Fahrzeugs gerade eine andere Position eingenommen hat. Unter einer visuellen Anzeige ist insbesondere eine symbolhafte oder sprachliche Darstellung der entsprechenden Informationen in einem Display, beispielsweise einem Head-up-Display (HUD) oder einem Kombiinstrument des Fahrzeugs, zu verstehen. Der Fahrer kann somit eindeutig über eine unzulässige Komponentenanordnung informiert werden. Es ist dabei keine Verwechselung oder Verwirrung des Fahrers zu erwarten.

Die Idee der Erfindung ist somit, den Insassen des Fahrzeugs Informationen über die Anordnung von entsprechenden Komponenten im Fahrzeug zur Verfügung stellen zu können, ohne dass die Insassen diese im Blick haben oder speziell darauf achten müssten. Insbesondere sollen dadurch unzulässige Komponentenanordnungen in einem Fahrzeug während des Fahrbetriebs verhindert werden. Hierfür sollen die Insassen und insbesondere der Fahrer des Fahrzeugs gesondert auf das Vorliegen einer solchen unzulässigen Komponentenanordnung hingewiesen werden. Der Fahrer bzw. Nutzer einer Fahrzeugs darf eine solche Anordnung somit im Stand ohne eine Warnung verwenden, während er im Fahrbetrieb durch geeignete optische und/oder akustische Warnmeldungen über die Unzulässigkeit dieser Anordnung informiert werden kann. Auf eine mehrsprachige Instruktion, z.B. über ein auf die jeweilige Komponente aufgebrachtes Hinweisschild, kann verzichtet werden, da zusätzlich zu einem ausgegebenen Hinweis auch klare Handlungsempfehlungen an die Benutzer des Fahrzeugs übermittelt werden können.

In bevorzugter Ausgestaltung der Erfindung ist vorgesehen, dass zur Bestimmung des Befestigungspunktes der Komponente und einer Einstellposition der Komponente Anordnungsinformationen zwischen der Komponente und dem Fahrzeug kabellos über eine Funkverbindung übertragen werden. Dies hat den Vorteil, dass keine Kabelverbindung zum jeweiligen Befestigungspunkt geführt werden muss. Insbesondere können die Befestigungspunkte als passive Komponenten ausgeführt sein, die lediglich eine mechanische Arretierung der Komponente ermöglichen. Vorzugsweise ist der Befestigungspunkt bei einer Arretierung jedoch durch die Komponente individualisiert über eine Kodierung erkennbar. Diese Kodierung kann insbesondere mechanisch (z.B. mittels einer individueller Formung des Befestigungspunktes), optisch (z.B. durch einen aufgebrachten Barcode) oder elektronisch (z.B. mittels RFID-Markierung oder einer anderen geeigneten drahtlosen Übertragungstechnik) erfolgen. Die Funkverbindung wird vorzugsweise zwischen der Komponente und dem Fahrzeug aufgebaut. Alternativ kann eine entsprechende Sendeeinrichtung jedoch auch am Befestigungspunkt vorgesehen sein.

Bevorzugt wird die Funkverbindung zwischen einem Sendemodul der Komponente und einem Empfangsmodul des Fahrzeugs aufgebaut, wobei das fahrzeugseitige Empfangsmodul zur Verwendung mit einer Vielzahl von Komponenten eingerichtet ist. Dies hat den Vorteil, dass das fahrzeugseitige Empfangsmodul als zentrale Gegenstelle für mehrere Komponenten genutzt werden kann und nur einmalig im Fahrzeug vorhanden sein muss. Insbesondere kann es sich hierbei auch um ein bereits im Fahrzeug für andere Informationsübertragungsfunktionen eingerichtetes Empfangsmodul, beispielsweise ein auch für die drahtlose Sitzbelegungserkennung genutztes Sende-/Empfangsmodul, handeln. Bei einem in der Komponente angeordneten Sendemodul kann es ich insbesondere um einen energiesparenden batteriebetriebenen Sender handeln. Eine solche Komponente benötigt keine zusätzliche Energieversorgung am Befestigungspunkt und kann daher auf elektronische Kontakte und eine externe Verkabelung verzichten. Vorzugsweise wird die Funkverbindung mittels Bluetooth Low Energy (BLE) oder 5G aufbaut, welche die momentan energiesparendsten Übertragungsplattformen darstellen. Ebenfalls bevorzugt sind Funkverbindungen mittels NFC, WLAN-p oder über andere Übertragungstechniken wie induktive Verfahren. Dadurch wird eine wartungsfreie Funktion der Komponenten über einen langen Zeitraum gewährleistet und eine Energieversorgung kann über mehrere Jahre sichergestellt werden.

In einer alternativen Ausführungsform kann die Komponente auch ein Empfangsmodul bzw. ein kombiniertes Sende-/Empfangsmodul umfassen. Dadurch können weitere Funktionen wie eine aktive Abfrage der Komponente, beispielsweise zu deren Anordnung oder zum Zustand einer in der Komponente integrierten Batterie erfolgen. Im Fahrzeug muss dann ein entsprechendes Empfangsmodul bzw. ein kombiniertes Sende-/Empfangsmodul vorhanden sein. Ein nur passives Senden der Komponenten hat den Nachteil, dass dieses Senden unabhängig vom Nutzungszustand des Fahrzeugs erfolgt.

Eine weitere Möglichkeit zur Energieeinsparung besteht darin, dass die arretierte Komponente regelmäßig (d.h. nicht kontinuierlich) Informationen zum Befestigungspunkt und/oder zu einer Einstellposition der Komponente an das Fahrzeug übermittelt. Eine Übermittlung könnte beispielsweise in zeitlichem Abstand von einigen Sekunden erfolgen.

In bevorzugter Ausgestaltung der Erfindung ist vorgesehen, dass die akustische und/oder visuelle Anzeige des Befestigungspunktes und/oder der Einstellposition der Komponente nur bei einer unzulässigen Anordnung der Komponente erfolgt. Eine solche Anzeige wird dann vorzugsweise als Warnmeldung besonders hervorgehoben ausgegeben.

Eine Einschränkung der Anzeige auf unzulässige Komponentenanordnungen kann zum einen dadurch geschehen, dass schon die Bestimmung des Befestigungspunktes und der Einstellposition der arretierten Komponente auf unzulässige Anordnungen der Komponente beschränkt sind. Da somit nur unzulässige Komponentenanordnungen bestimmt werden, ist eine Anzeige auf solche unzulässigen Anordnungen der Komponenten beschränkt.

Alternativ kann eine entsprechende Auswertung von Komponentenanordnungen auch erst elektronisch im Fahrzeug erfolgen. Dies bedeutet, dass im Fahrzeug Informationen über unzulässige oder alle zulässigen Komponentenanordnungen in elektronsicher Form hinterlegt sind und diese bei der Anzeige mit berücksichtigt werden. Ein entsprechendes Mittel zur Auswertung vergleicht dann diese hinterlegten Informationen mit den sich aus den einzelnen verfahrensgemäßen Bestimmungen ergebenden Informationen und wertet diese aus. Ergibt die Prüfung, dass eine unzulässige Anordnung einer Komponente vorliegt, erfolgt eine entsprechende Anzeige im Fahrzeug.

Die Bestimmung des Befestigungspunktes der Komponente und einer Einstellposition der Komponente erfolgt mittels in Reihe geschalteter mechanischer Kontaktschalter. Hierbei kann es sich beispielsweise um Mikroschalter, Reed-Kontakte oder ähnliches handeln. Beispielsweise kann der erste Kontaktschalter durch Arretierung an einem bestimmten Befestigungspunkt geschaltet werden. Der zweite elektronische Schalter kann bei einer bestimmten Einstellposition geschaltet werden. Insbesondere können dann bei einer unzulässigen Komponentenanordnung, d.h. bei einer bestimmten nicht gewünschten Kombination aus Befestigungspunkt und Einstellposition, beide Kontaktschalter geschlossen werden und dadurch eine entsprechende Bestimmung der Anordnung ermöglichen. Beispielsweise kann durch die in Reihe geschalteten mechanischer Kontaktschalter eine in der Komponente vorhanden Sendeeinheit zum Aufbau einer Funkverbindung aktiviert werden.

Ein weiter Aspekt der vorliegenden Erfindung betrifft ein Fahrzeug umfassend eine Komponente, wobei es sich bei der Komponente um ein fest an einem oder mehreren Befestigungspunkten im Fahrzeug arretierbares Objekt handelt, das Objekt mindestens zwei verschiedene Einstellpositionen aufweist und das Fahrzeug und die Komponente zur Durchführung eines Verfahrens nach einem der vorhergehenden Ansprüche eingerichtet sind.

Hierzu kann das Fahrzeug ein Mittel zur Ermittlung des Befestigungspunktes und der Einstellposition der Komponente sowie ein Mittel zur akustischen und/oder visuellen Anzeige des Befestigungspunktes und/oder der Einstellposition der Komponente aufweisen. Bei dem Mittel zur Ermittlung des Befestigungspunktes und der Einstellposition der Komponente kann es sich insbesondere um eine elektronische Schaltung handeln, welche die elektronischen Informationen für das Mittel zur Anzeige bereitstellt. Dem Mittel zur Ermittlung des Befestigungspunktes und der Einstellposition der Komponente können weitere Bauelemente zur Bestimmung des Befestigungspunktes der Komponente und einer Einstellposition der Komponente vor- und nachgeschaltet sein. Hierbei kann es sich beispielweise um Kontaktschalter, Funkeinrichtungen und ein eventuell vorhandenes Mittel zur Auswertung der von der Komponente übertragenen Informationen gezählt.

Vorzugsweise weist das Fahrzeug ein Empfangsmodul und die Komponente ein Sendemodul auf, welche dazu eingerichtet sind, Anordnungsinformationen zwischen der Komponente und dem Fahrzeug kabellos über eine Funkverbindung zu übertragen. Weiterhin kann das Fahrzeug auch ein entsprechendes Sendemodul (oder ein kombiniertes Sende-/Empfangsmodul) und die Komponente ein Empfangsmodul (oder ein kombiniertes Sende-/Empfangsmodul) aufweisen. Dadurch können auch bidirektionale Funkverbindungen zwischen dem Fahrzeug und den einzelnen Komponenten aufgebaut werden. Dies ermöglicht ein gezieltes Abfragen einzelner Komponenten, beispielsweise hinsichtlich ihrer Anordnung oder ihres Batteriezustandes.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines erfindungsgemäßen Verfahrens zur Anzeige der Anordnung von Komponenten in einem Fahrzeug, und
- Figur 2: eine Darstellung einer Ausführungsform eines erfindungsgemäßen Fahrzeugs.

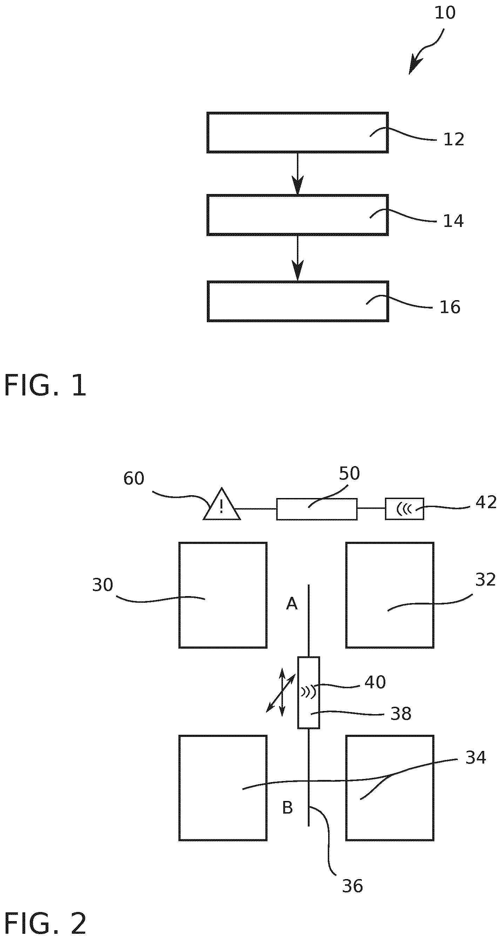

Figur 1 zeigt eine schematische Darstellung eines erfindungsgemäßen Verfahrens 10 zur Anzeige der Anordnung von Komponenten in einem Fahrzeug. Für Fahrzeuge, welche entnehmbare und fest an einem oder mehreren Befestigungspunkten im Fahrzeug arretierbare Komponenten mit mindestens zwei verschiedenen Einstellpositionen aufweisen, umfasst das Verfahren 10 die Schritte: Bestimmung des Befestigungspunktes 12 der arretierten Komponente; Bestimmung einer Einstellposition 14 der arretierten Komponente (wobei die Bestimmung 12, 14 des Befestigungspunktes A, B der Komponente 38 und der Einstellposition der Komponente 38 mittels in Reihe geschalteter mechanischer Kontaktschalter erfolgt); akustische und/oder visuelle Anzeige 16 des Befestigungspunktes und/oder der Einstellposition der Komponente. Vorzugsweise erfolgt die akustische und/oder visuelle Anzeige 16 des Befestigungspunktes und/oder der Einstellposition der Komponente nur bei einer unzulässigen Komponentenanordnung. Dies kann dadurch realisiert werden, dass die Bestimmung 12, 14 des Befestigungspunktes und der Einstellposition der arretierten Komponente auf unzulässige Anordnungen einer Komponente beschränkt wird. Alternativ kann eine entsprechende Auswertung von Komponentenanordnungen auch erst elektronisch im Fahrzeug erfolgen.

Figur 2 zeigt eine Darstellung einer Ausführungsform eines erfindungsgemäßen Fahrzeugs. Es wird die Umsetzung eines erfindungsgemäßen Verfahrens am Beispiel einer entnehmbaren Mittelkonsole bzw. eines Mitteltisches als entsprechende Komponente 38 gezeigt. Diese sind insbesondere zur Arretierung an einem Befestigungspunkt A im vorderen Fahrzeugbereich zwischen Fahrersitz 30 und Beifahrersitz 32 vorgesehen. Weitere unabhängige Befestigungspunkte können anderswo im Fahrzeug vorgesehen sein. Eine Arretierung kann am Fahrzeug wie dargestellt auch an mehreren Befestigungspunkten A, B entlang einer Schiene (bzw. eines Schienensystems) 36 erfolgen, wodurch eine Verschiebung der Mittelkonsole auch in den Bereich der hinteren Sitzgruppe 34 ermöglicht wird. Hinsichtlich der möglichen Einstellpositionen der Mittelkonsole wird vereinfacht angenommen, dass diese im Wesentlichen zwei unterschiedliche Höheneinstellungen, d.h. eine untere und eine obere Höhenposition, erlaubt. Als eine unzulässige Komponentenanordnung wird aus Gründen der Gebrauchssicherheit eine Arretierung am vorderen Befestigungspunkt A bei einer oberen Höheneinstellung angesehen. Durch die Erfindung sollen solche unzulässigen Komponentenanordnungen in einem Fahrzeug effektiv verhindert werden.

Dazu kann die Mittelkonsole mit einem Kontaktschalter (Mikroschalter, Reed-Kontakt oder ähnliches) ausgestattet werden, der erkennt, ob sich die Mittelkonsole zwischen dem Fahrersitz 30 und dem Beifahrersitz 32 befindet. Ein zweiter elektronischer Schalter kann zur Abfrage genutzt werden, ob sich die Konsole 38 in einer anderen als der zulässigen Fahrposition (d.h. in der unteren Höheneinstellung) befindet. Die beiden Schalter können in Reihe geschaltet sein. Wenn nun die Mittelkonsole auf der Schiene 36 zwischen dem Fahrersitz 30 und dem Beifahrersitz 32 arretiert ist und sich nicht in der unteren Höheneinstellung befindet, dann kann über eine elektronische Einheit in der Mittelkonsole (d.h. Sende- bzw. Sende-/Empfangseinheit 40 der Komponente 38) ein entsprechendes Signal an eine im Fahrzeug integrierte Empfangseinheit (d.h. Sende- bzw. Sende-/Empfangseinheit 42 des Fahrzeugs) übermittelt werden, wobei ein Mittel zur Ermittlung des Befestigungspunktes und der Einstellposition der arretierten Komponente 50 dieses Signal auswertet und dadurch eine Bestimmung des Befestigungspunktes (Mittelkonsole auf der Schiene 36 am Befestigungspunkt A zwischen dem Fahrersitz 30 und dem Beifahrersitz 32 arretiert) und einer Einstellposition (untere Höheneinstellung) der arretierten Komponente 38 vornimmt. Daraus kann eine entsprechende akustische und/oder visuelle Warnmeldung (sinngemäß: Mittelkonsole in unzulässiger Anordnungen) erzeugt und über ein entsprechendes Mittel zur akustischen und/oder visuellen Anzeige 60 beispielsweise dem Fahrer signalisiert werden.

Eine solche Lösung weist eine Vielzahl von Vorteilen gegenüber den zuvor genannten Problemen im Stand der Technik auf. Die Mittelkonsole kann dadurch weiterhin frei in der Schiene (bzw. dem Schienensystem) bewegt werden, auch in die erste Sitzreihe. Eine mechanische Sperre, die das Verriegeln der Höhenverstellung in der ersten Sitzreihe verhindert, ist dabei nicht erforderlich. Eine als Mitteltisch ausgebildet Mittelkonsole kann im Stand (Zündung aus) ebenfalls in der ersten Sitzreihe verwendet werden (beispielsweise als halbseitiger Arbeitstisch bei nicht besetztem Beifahrersitz). Durch eine eventuell schon vorhandene Sende-Empfangseinheit der Sitzbelegungserkennung ist diese Lösung kostengünstig realisierbar.

### Bezugszeichenliste

- 10: Verfahren zur Anzeige der Anordnung von Komponenten
- 12: Bestimmung des Befestigungspunktes einer arretierten Komponente
- 14: Bestimmung einer Einstellposition einer arretierten Komponente
- 16: akustische und/oder visuelle Anzeige
- 30: Fahrersitz
- 32: Beifahrersitz
- 34: hintere Sitzgruppe
- 36: Schiene (bzw. Schienensystem) mit unterschiedlichen Befestigungspunkten
- 38: Komponente (Mittelkonsole/Mitteltisch mit unterschiedlichen Höhenpositionen)
- 40: Sende- bzw. Sende-/Empfangseinheit der Komponente
- 42: Sende- bzw. Sende-/Empfangseinheit des Fahrzeugs
- 50: Mittel zur Ermittlung des Befestigungspunktes und einer Einstellposition einer arretierten Komponente
- 60: Mittel zur akustischen und/oder visuelle Anzeige

- A, B: Befestigungspunkte

## Patentansprüche

1. Verfahren (10) zur Anzeige der Anordnung von Komponenten (38) in einem Fahrzeug, wobei es sich bei den Komponenten (38) um fest an einem oder mehreren Befestigungspunkten (A, B) im Fahrzeug arretierbare Objekte handelt und die Objekte mindestens zwei verschiedene Einstellpositionen aufweisen, folgende Schritte umfassend:
- Bestimmung (12) des Befestigungspunktes (A, B) der arretierten Komponente (38);
- Bestimmung (14) einer Einstellposition der arretierten Komponente (38), wobei die Bestimmung (12, 14) des Befestigungspunktes (A, B) der Komponente (38) und der Einstellposition der Komponente (38) mittels in Reihe geschalteter mechanischer Kontaktschalter erfolgt;
- akustische und/oder visuelle Anzeige (16) des Befestigungspunktes (A, B) und/oder der Einstellposition der Komponente (38).

2. Verfahren nach Anspruch 1, wobei zur Bestimmung (12, 14) des Befestigungspunktes (A, B) der Komponente (38) und einer Einstellposition der Komponente (38) Anordnungsinformationen zwischen der Komponente (38) und dem Fahrzeug kabellos über eine Funkverbindung übertragen werden.

3. Verfahren nach Anspruch 2, wobei die Funkverbindung zwischen einem Sendemodul (40) der Komponente (38) und einem Empfangsmodul (42) des Fahrzeugs aufgebaut wird, wobei das fahrzeugseitige Empfangsmodul (42) zur Verwendung mit einer Vielzahl von Komponenten (38) eingerichtet ist.

4. Verfahren nach Anspruch 2 oder 3, wobei die Funkverbindung mittels Bluetooth Low Energy, 5G, NFC, oder WLAN-p aufgebaut wird.

5. Verfahren nach einem der vorhergehenden Ansprüche, wobei die arretierte Komponente (38) regelmäßig Informationen zum Befestigungspunkt (A, B) der Komponente (38) und/oder zu seiner Einstellposition an das Fahrzeug übermittelt.

6. Verfahren nach einem der vorhergehenden Ansprüche, wobei die akustische und/oder visuelle Anzeige (16) des Befestigungspunktes (A, B) und/oder der Einstellposition der Komponente (38) nur bei einer unzulässigen Anordnung der Komponente (38) erfolgt.

7. Verfahren nach einem der vorhergehenden Ansprüche, wobei eine aktive Abfrage der Komponente (38) mittels eines von der Komponente (38) umfassten Empfangsmoduls oder eines kombinierten Sende-/Empfangsmoduls erfolgt.

8. Fahrzeug umfassend eine Komponente (38), wobei es sich bei der Komponente um ein fest an einem oder mehreren Befestigungspunkten (A, B) im Fahrzeug arretierbares Objekt handelt, das Objekt mindestens zwei verschiedene Einstellpositionen aufweist und das Fahrzeug und die Komponente (38) zur Durchführung eines Verfahrens (10) nach einem der vorhergehenden Ansprüche eingerichtet sind.

9. Fahrzeug nach Anspruch 8, wobei das Fahrzeug ein Mittel zur Ermittlung des Befestigungspunktes und der Einstellposition (50) der Komponente (38) sowie ein Mittel zur akustischen und/oder visuellen Anzeige (60) des Befestigungspunktes (A, B) und/oder der Einstellposition der Komponente (38) aufweist.

10. Fahrzeug nach Anspruch 8 oder 9, wobei das Fahrzeug ein Empfangsmodul (42) und die Komponente (38) ein Sendemodul (40) aufweisen, dazu eingerichtet, Anordnungsinformationen zwischen der Komponente (38) und dem Fahrzeug kabellos über eine Funkverbindung zu übertragen.

## Claims

1. Method (10) for indicating the arrangement of components (38) in a vehicle, the components (38) being objects which can be fixedly locked at one or more fastening points (A, B) in the vehicle and the objects having at least two different setting positions, the method comprising the following steps:
- determining (12) the fastening point (A, B) of the locked component (38);
- determining (14) a setting position of the locked component (38), the fastening points (A, B) of the component (38) and the setting position of the component (38) being determined (12, 14) by means of mechanical contact switches connected in series;
- acoustically and/or visually indicating (16) the fastening point (A, B) and/or the setting position of the component (38).

2. Method according to Claim 1, wherein items of arrangement information are transmitted between the component (38) and the vehicle in a wireless manner via a radio link for determining (12, 14) the fastening point (A, B) of the component (38) and a setting position of the component (38).

3. Method according to Claim 2, wherein the radio link is established between a transmitting module (40) of the component (38) and a receiving module (42) of the vehicle, wherein the vehicle-side receiving module (42) is designed for use with a large number of components (38) .

4. Method according to Claim 2 or 3, wherein the radio link is established by means of Bluetooth Low Energy, 5G, NFC or WLANp.

5. Method according to one of the preceding claims, wherein the lockable component (38) transmits items of information relating to the fastening point (A, B) of the component (38) and/or its setting position to the vehicle at regular intervals.

6. Method according to one of the preceding claims, wherein the fastening point (A, B) and/or the setting position of the component (38) are/is acoustically and/or visually indicated (16) only in the case of impermissible arrangement of the component (38).

7. Method according to one of the preceding claims, wherein the component (38) is actively checked by means of a receiving module included in the component (38) or by means of a combined transceiver module.

8. Vehicle comprising a component (38), the component being an object which can be fixedly locked at one or more fastening points (A, B) in the vehicle, the object having at least two different setting positions and the vehicle and the component (38) being designed to carry out a method (10) according to one of the preceding claims.

9. Vehicle according to Claim 8, wherein the vehicle has a means for ascertaining the fastening point and the setting position (50) of the component (38) and also a means for acoustically and/or visually indicating (60) the fastening point (A, B) and/or the setting position of the component (38).

10. Vehicle according to Claim 8 or 9, wherein the vehicle has a receiving module (42) and the component (38) has a transmitting module (40), designed to transmit items of arrangement information between the component (38) and the vehicle in a wireless manner via a radio link.

## Revendications

1. Procédé (10) permettant d'afficher l'agencement de composants (38) dans un véhicule, les composants (38) étant des objets pouvant être arrimés solidement à un ou plusieurs points de fixation (A, B) dans le véhicule et les objets présentant au moins deux positions de réglage différentes, comprenant les étapes suivantes consistant à :
- déterminer (12) le point de fixation (A, B) du composant arrimé ;
- déterminer (14) une position de réglage du composant arrimé (38), la détermination (12, 14) du point de fixation (A, B) du composant (38) et de la position de réglage du composant (38) étant effectuée au moyen de commutateurs de contact mécaniques connectés en série ;
- afficher (16) de manière acoustique et/ou visuelle le point de fixation (A, B) et/ou la position de réglage du composant (38).

2. Procédé selon la revendication 1, dans lequel des informations d'agencement sont transmises sans fil entre le composant (38) et le véhicule par une liaison radio pour la détermination (12, 14) du point de fixation (A, B) du composant (38) et d'une position de réglage du composant (38).

3. Procédé selon la revendication 2, dans lequel la liaison radio entre un module d'émission (40) du composant (38) et un module de réception (42) du véhicule est établie, le module de réception côté véhicule (42) étant conçu pour être utilisé avec une pluralité de composants (38).

4. Procédé selon la revendication 2 ou 3, dans lequel la liaison radio est établie par Bluetooth Low Energy, 5G, NFC ou WLAN-p.

5. Procédé selon l'une quelconque des revendications précédentes, dans lequel le composant arrimé (38) transmet régulièrement au véhicule des informations concernant le point de fixation (A, B) du composant (38) et/ou concernant sa position de réglage.

6. Procédé selon l'une quelconque des revendications précédentes, dans lequel l'affichage acoustique et/ou visuel (16) du point de fixation (A, B) et/ou de la position de réglage du composant (38) n'est effectué que dans le cas d'un agencement inadmissible du composant (38).

7. Procédé selon l'une quelconque des revendications précédentes, dans lequel une interrogation active du composant (38) est effectuée au moyen d'un module de réception compris dans le composant (38) ou d'un module d'émission/réception combiné.

8. Véhicule, comprenant un composant (38), dans lequel le composant est un objet pouvant être arrimé solidement à un ou plusieurs points de fixation (A, B) dans le véhicule, l'objet présente au moins deux positions de réglage différentes, et le véhicule et le composant (38) sont conçus pour exécuter un procédé (10) selon l'une quelconque des revendications précédentes.

9. Véhicule selon la revendication 8, dans lequel le véhicule présente un moyen servant à déterminer le point de fixation et la position de réglage (50) du composant (38) ainsi qu'un moyen servant à l'affichage acoustique et/ou visuel (60) du point de fixation (A, B) et/ou de la position de réglage du composant (38).

10. Véhicule selon la revendication 8 ou 9, dans lequel le véhicule présente un module de réception (42) et le composant (38) présente un module d'émission (40) qui sont conçus pour transmettre sans fil des informations d'agencement entre le composant (38) et le véhicule par une liaison radio.
